# EUROPEAN PATENT APPLICATION

(11) **EP 4 464 527 A1**
(43) Date of publication of application: **20.11.2024**
(21) Application number: 24176401.8
(22) Date of filing: 16.05.2024
(51) Int. Cl.: B60G 99/00, B60G 15/06, B62D 33/06

(54) **IMPROVED SUSPENSION SYSTEM FOR WORK VEHICLE**

(30) Priority: 16.05.2023 IT 202300009882
(71) Applicant: CNH Industrial Italia S.p.A., 10156 Torino (IT)
(72) Inventor: PARISI, Fabio, 10156 Turin (IT); PESCIONE, Fabio, 10156 Turin (IT); COMPAGNONI, Roberto, 10156 Turin (IT)
(74) Representative: CNH Industrial IP Department

(57) **Abstract**

Suspension system (4) for a work vehicle (1) provided with a cab (2) and a chassis (3), and configured to damp the relative movement between cab (2) and chassis (3), the suspension system (4) comprising a front suspension portion (5) and a rear suspension portion (6) along a longitudinal axis (A) of vehicle (1), the rear suspension portion (6) comprising a connection portion (12) and a damping system (13), the connection portion (12) comprising an upper extremity (12b) and a lower extremity (12a) along a vertical direction axis (B), the upper extremity (12a) being operatively connected to the cab (2) via damping system (13) and lower extremity (12a) being fixedly connected to chassis (3) .

## Description

### TECHNICAL FIELD

The present invention concerns a suspension system for a work vehicle.

The present invention finds its preferred, although not exclusive, application in a suspension system for specialty tractors. Reference will be made to this application by way of example below.

### BACKGROUND OF THE INVENTION

Work vehicles such as agricultural vehicles and in particular specialty vehicles e.g. vineyard vehicles needs more and more to increase the comfort of the driver.

One of the most important factors while considering comfort of using a work vehicle is due to suspension system. Indeed, suspension system has a key importance in avoiding transmission of vibration. Such aim is furthermore felt in agricultural vehicles that moves on ground and in specialty vehicles that moves on impervious grounds.

However, specialty vehicles have usually uncommon dimensions and, in particular, vineyard vehicles, have small dimensions.

These uncommon dimensions avoid the use of standard suspension systems that are usually used on agricultural tractors

Therefore, the need is felt to provide work vehicles such as specialty vehicles with improved suspension systems that allows to be mounted thereon while maintaining high operational performances.

An aim of the present invention is to satisfy the above mentioned needs in a cost-effective and optimized manner.

### SUMMARY OF THE INVENTION

The aforementioned aim is reached by a suspension system and a vehicle as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a portion of a vehicle and a suspension system according to the invention;
- Figure 2 is a lateral schematic view of the vehicle and the suspension system of figure 1;
- Figure 3 is a rear schematic view of the vehicle and the suspension system of figure 1; and
- Figure 4 is a perspective view of a portion of the suspension system according to the present invention.

### DETAILED DESCRIPTION OF THE INVENTION

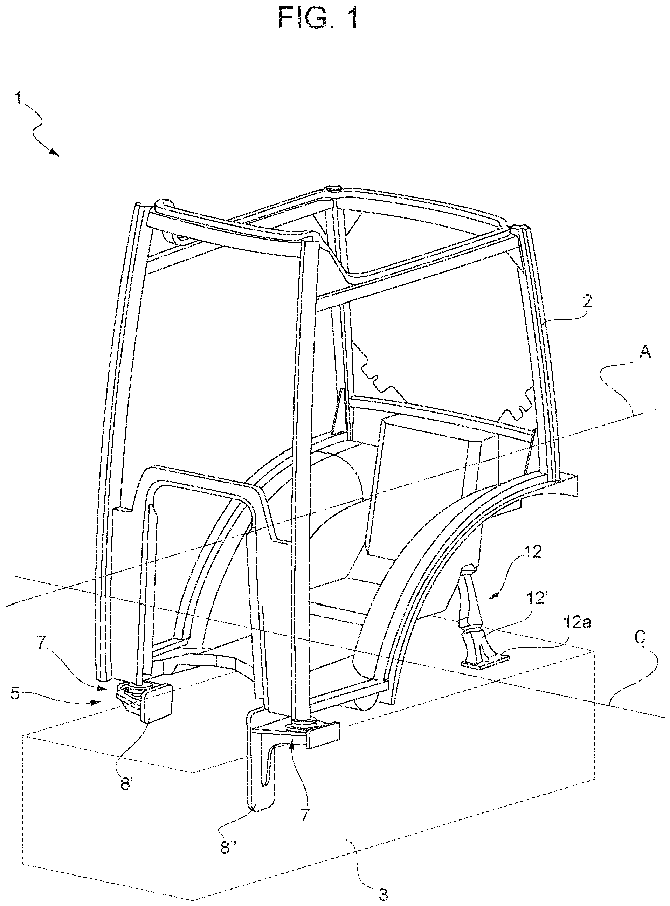

Figure 1 discloses a portion of a work vehicle 1, in particular an agricultural vehicle such as a tractor and in further detail a specialty tractor such as a vineyard vehicle.

Vehicle 1 comprises a cab 2 carried in a movable manner with respect to a chassis 3 (shown in dotted lines) via a suspension system 4. In detail, suspension system 4 comprises a front suspension portion 5 and a rear suspension portion 6 with respect to vehicle longitudinal direction axis A and configured to allow suspension of the cab with respect to a front and a rear portion of chassis, such as a front and a rear axle of the tractor.

In particular the front suspension portion 4 comprises bumper means 7 interposed between respective support elements 8', 8" that are fixedly carried by the vehicle chassis 3.

Such support elements 8', 8" are a left and a right support element 8', 8'' with respect to longitudinal axis A and symmetrically placed with respect to this latter.

The bumper means 7 each comprises a connection element 7' fixedly carried by the cab 2 and a deformable element 7", such as air springs or similar devices, operationally interposed between the connection element 7' and the respective support elements 8', 8".

The deformable element 7" is configured to vary its extension along an inclined axis B, e.g. a vertical axis perpendicular to longitudinal axis A, thereby varying the space between connection element 7' and the respective support elements 8', 8".

Rear suspension portion 6 essentially comprises a connection portion 12 and a dampening system 13, the connection portion 12 is rigidly connected to one side to the chassis 3, i.e. on rear axle, and on the other side to dampening system 13. This latter operatively connects together the connection portion 12 to the cab 2.

In detail, the connection portion 12 comprises a pair of legs 12', 12'' extending between a lower extremity portion 12a fixedly connected to chassis 3 and an upper extremity portion 12b connected to the dampening system 13.

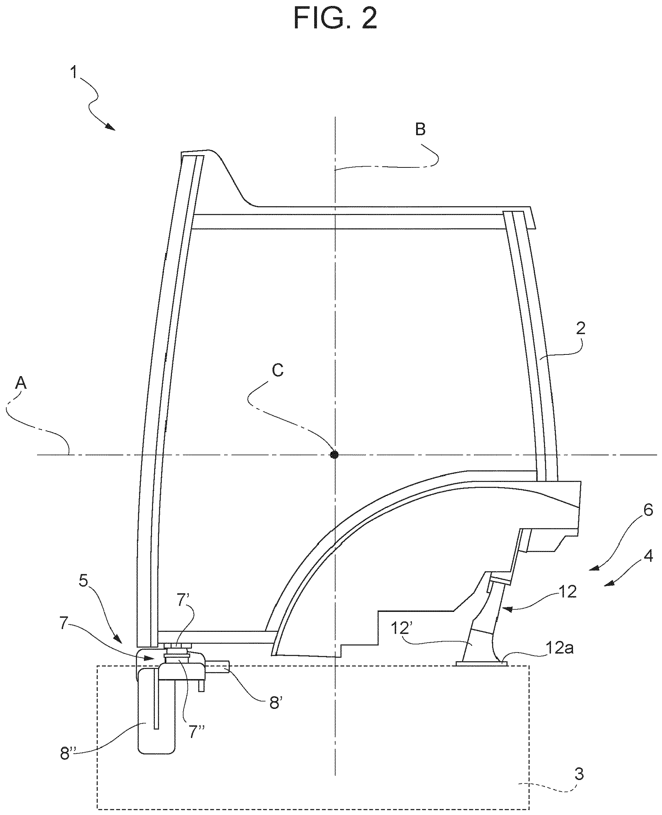

As better shown in figure 2, legs 12', 12" extends along vertical axis B, in particular inclined with respect to this latter and to longitudinal axis A. In greater detail, legs 12', 12'' defines an obtuse angle faced to front suspension portion 5 with longitudinal axis A.

Preferably, connection portion 12 is trapezoidal shaped and therefore further comprises a transversal element 12‴ connecting together the legs 12', 12‴ and extending along transversal axis C directions between the upper extremities 12b of legs 12', 12''. In particular, the connection portion1 2 may be realized as a one piece, monolithic, element.

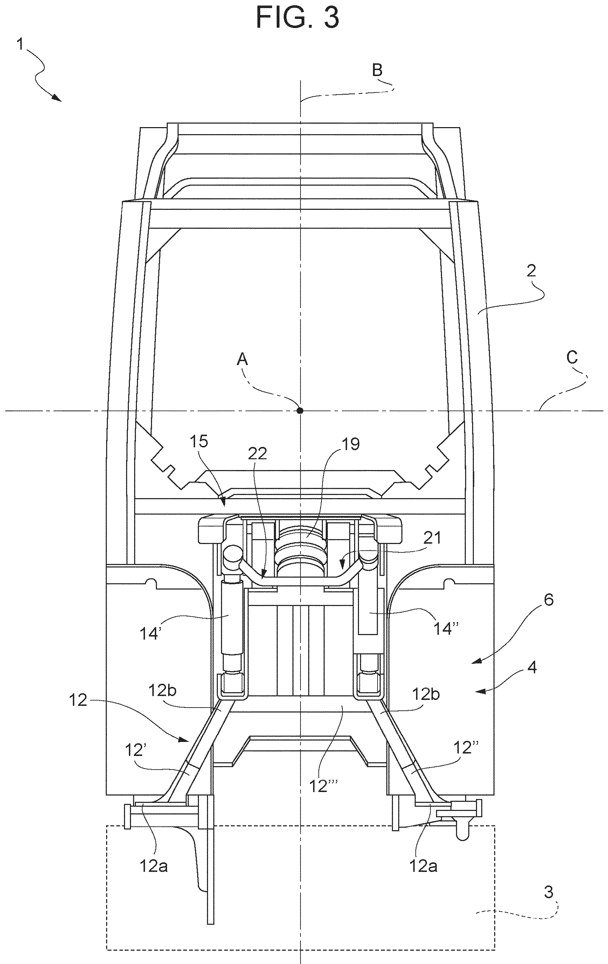

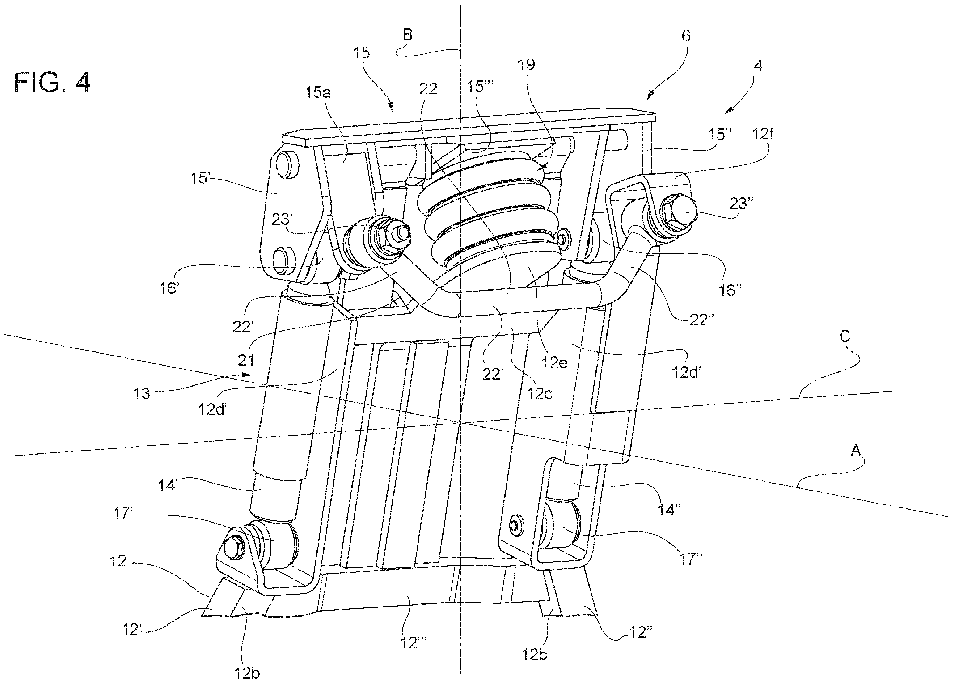

The dampening system 13 (see in details figures 3 and 4) comprises a pair of first damping elements 14', 14", in particular cylinders such as hydraulic cylinders, operationally interposed between connection portion 12 and a connection base 15 fixedly carried to cab 2, therefore between chassis 3 and cab 2.

The first damping elements 14', 14" are in particular carried opposed about vertical axis B along transversal direction axis C. In detail, the first damping elements 14', 14" are connected to the connection base 15 and to the connection portion 12 via movable connections, in particular hinge connections.

Accordingly, respective first hinge connections 16', 16'' are provided between the upper extremity of first damping elements 14', 14'' and the connection base 15 and respective second hinge connections 17', 17" are provided between lower extremity of first damping elements 14', 14'' to the connection portion 12.

In particular, the first and second hinge connections 16', 16", 17', 17'' are configured to allow rotation of the respective extremities of first damping elements 14', 14" about axis parallel to transversal axis C.

In particular, the first hinges connections 16', 16" are operationally interposed between flanged portions 15', 15'' extending from connection base 15. In detail, flanged portions 15', 15'' extends from the connection base 15 along vertical axis.

The damping system 13 further comprises a second damping element 19 operationally interposed between the support portion 12 and the connection base 15. In particular, the second damping element 19 may comprise a single damping element, such as an air spring/air bellow, interposed along transversal axis C between the first damping elements 16', 16".

In detail, the second damping element 19 is interposed in parallel to the above first damping elements 14', 14'' with respect to cab 2 and chassis 3.

Preferably, the second damping element 19 is connected rigidly between the connection base 15 and a flanged portion 12e of the support portion as described in detail in the following.

The flanged portion 12e is carried by an upper cross-member element 12c transversally connecting uprights 12d', 12d" extending along axis B starting from transversal element 12‴. The uprights 12d', 12d" ' are preferably plate-shaped and are configured to surround at least part of the lateral side of the first damping elements 14', 14''.

In detail, one of the first damping elements 14' is surrounded only laterally by the uprights 12d' while the other of the first damping elements 14'' is almost totally surrounded, i.e. housed, within the uprights 12d'' that has therefore a boxed shape around such first damping element 14".

The flanged portion 12e therefore extends starting from an upper edge of the upper cross-member element 12c along axis B direction and inclined with respect to this latter and to longitudinal axis A. In particular, the flanged portion 12e extends getting away from the front portion of the vehicle 1, i.e. along longitudinal axis A to getting closer the rear portion thereof.

The damping system 13 may further comprise stabilizing means 21 operationally interposed between the connection structure 12 and the connection base 15 and configured to avoid transmission of rotational torques and transversal loads.

In particular, stabilizing means 21 comprise essentially a rod 22, in particular a panhard road. In particular, rod 22 extends along transversal axis C and has a "U" shape in a plane defined by vertical and transversal axis B, C and comprises a central portion 22' that is substantially parallel to transversal axis C and a pair of lateral portions 22'' that are inclines with respect to the transversal axis C.

In detail, lateral portions 22" are inclined so that the central portion 22' is placed in a rear position, with respect to longitudinal axis A, with respect tot eh second damping means 10, i.e. rear with respect to flanged portion 12e and in particular beneath this latter along vertical axis B.

In detail, the extremities of the rod 22, i.e. the lateral portions 22'' described above, are connected respectively to the connection base 15 and to the connection structure 12 via respective movable connections, in particular via hinge connections 23', 23".

In detail, hinge connections 23', 23'' are configured to rotate about longitudinal axis A direction. Moreover, hinge connections 23', 23" are placed substantially at the same position of upper hinge connections 16', 16'' along vertical axis B direction and rear with respect to longitudinal axis A direction.

In further detail, hinge connections 23', 23" are provided respectively between a flange 15a fixedly carried by flanged portion 15' and by a flange 12f fixedly carried by one of uprights 12d'', in particular by the uprights 12d" that surrounds almost entirely the related first damping element 14".

Making reference to figure 2 the operation of the embodiments of the invention as described above is the following.

During its operation, vehicle 1 moves on ground, therefore above its profile that may comprise variable heights. Front suspension portion 5 allows rotation of the cab 2 with respect to chassis and dampening via damping means 7 that avoid excessive or sudden contacts between cab and supports 8', 8'' . On the rear side, the load acting between the support portion 12 and the cab 2 is dampened via damping system 13. In particular, the vertical motion, i.e. the relative motion of cab 2 and/or chassis 3 with respect to vertical axis B are dampened by first and second damping elements 14, 19. In particular, second damping element 19 may also acts against loads acting along longitudinal axis A, at least partially, due to its inclined arrangement. If loads acts along transversal direction axis C, then the stabilizing means 21 may compensate torque and loads in such direction between cab 2 and chassis 3 via road 22.

In view of the foregoing, the advantages of the suspension system and vehicle according to the invention are apparent.

Thanks to the proposed suspension system it is possible to allows a dampened rear connection of the cab to chassis thereby improving the general effect of suspension system and in this way the overall comfort of the vehicle is increased.

In particular, the use of the damping system allows to provide a high damping effect without the need of big spaces and this suspension system can be used also in small tractors.

It is clear that modifications can be made to the described suspension system and vehicle which do not extend beyond the scope of protection defined by the claims.

For example, the proposed structures of supports of support portion may have different shapes while maintaining their function and according to the specific typology of vehicle to which the suspension system is applied.

Moreover, damping means proposed 7, 14, 19 may be realized in different manner and with other devices with similar functions such as air bellows, hydraulic cylinders, different typologies of springs.

Similarly, rod 22 may have a different shape such as typology of hinge connections may vary.

## Claims

1. Suspension system (4) for a work vehicle (1) provided with a cab (2) and a chassis (3), said suspension system (4) being configured to damping the relative movement between said cab (2) and said chassis (3) and comprising a front suspension portion (5) and a rear suspension portion (6) along a longitudinal axis (A) of said vehicle (1),
said rear suspension portion (6) comprising a connection portion (12) and a damping system (13), said connection portion (12) comprising an upper extremity (12b) and a lower extremity (12a) along a vertical direction axis (B),
said upper extremity (12a) being operatively connected to said cab (2) via said damping system (13) and said lower extremity (12a) being fixedly connected to said chassis (3).

2. Suspension system according to claim 1, wherein said front suspension portion (5) comprises a right and a left bumper means (7) placed along a transversal axis direction (C) perpendicular to said longitudinal and vertical direction axis (A, B), each bumper means (7) being supported by a respective support element (8', 8'') fixedly connected to said chassis (3) .

3. Suspension system according to claim 2, wherein said bumper means (7) each comprises a connection element (7') configured to be fixedly carried by said cab (4) and a deformable element (7") operatively interposed between said connection element (7') and the respective support elements (8', 8").

4. Suspension system according to any of the preceding claims, wherein said damping system (13) comprises a pair of first damping elements (14', 14'') operationally interposed between a base portion (15) fixedly carried by said cab (2) and said connection portion (12), said first damping elements (14', 14'') being carried at their extremities by respective movable connections to said cab (2) and said connection portion (12).

5. Suspension system according to claim 4, wherein said movable connections comprises first hinge connections (16', 16'') connecting upper extremities of said damping elements (14', 14'') along said vertical direction axis (B) to said base portion (15) and second hinge connections (17', 17'') connecting lower extremities of said damping elements (14', 14") to said support portion (12).

6. Suspension system according to claim 5, wherein said first and second hinge connections (16', 16'', 17', 17'') allows a rotation about a transversal axis (C) perpendicular to said longitudinal and vertical direction axis (A, B).

7. Suspension system according to any of the preceding claims, wherein said damping system (13) further comprises a second damping element (19) operationally interposed between said cab (2) and said connection portion (12).

8. Suspension system according to claim 7 and any of claims 4 to 6, wherein said second damping element (19) is interposed in parallel between said cab (2) and said connection portion (12) with respect to said first damping elements (14', 14").

9. Suspension system according to claim 8, wherein said second damping element (19) is comprised said first damping elements (14', 14'') along a transversal direction axis (C) perpendicular to said longitudinal and vertical direction axis (A, B) .

10. Suspension system according to any of claims 7 to 9, wherein said second damping element (19) is being fixedly carried at its extremities to said cab (2) and said connection portion (12).

11. Suspension system according to any of claims 7 to 10, wherein said first damping elements (14', 14") comprises a cylinder and wherein said second damping element (19) comprise an air spring.

12. Suspension system according to any of the preceding claims, wherein said damping system (13) further comprises stabilizing means (21) operationally interposed between said connection base (15) and said connection portion (12) and configured to support loads acting along a transversal direction axis (C) perpendicular to said longitudinal and vertical direction axis (A, B).

13. Suspension system according to claim 12, wherein said stabilizing means (21) comprises a rod (22) connected to its extremities along said transversal axis (C) to said connection base (15) and said connection portion (12) via movable connections.

14. Suspension system according to claim 13, wherein said movable connections comprise hinge connections (23', 23").

15. Suspension system according to claim 14, wherein said hinge connections (23', 23") allow a rotation about an axis parallel to said longitudinal axis (A).

16. Suspension system according to claims 6 and 15, wherein said hinge connections (23', 23") of said rod (22) are placed in a rear position with respect to said first hinge connections (16', 16'') along said longitudinal axis (A) and substantially at the same position along said vertical direction axis (B).

17. Suspension system according to claim 15 or 16 in combination with any of claims 7 to 11, wherein said rod (22) is placed in a rear position wit respect to said second damping element (19) along said longitudinal axis (A).

18. Suspension system according to claim 4, 7 and 12, wherein said connection portion (12) comprises a pair of legs (12', 12'') provided with lower extremities (12a) connected rigidly to said chassis (2) and upper extremities (12b) connected to a respective first damping elements (14', 14''), said connection portion (12) further comprising a pair of uprights (12d', 12d'') extending from a respective leg (12', 12'') along said vertical axis direction (B), said stabilizing means (21) being connected between one of said uprights (12d', 12d") and said connection base (15), said connection portion (12) further defining a cross-member (12c) connected between said uprights (12d', 12d") along said transversal axis (C) direction, said second damping element (19) being connected between said cross-member (12c) and said connection base (15).

19. Vehicle (1) comprising a cab (2), a chassis (3) and a suspension system (4), said cab (2) being carried by said chassis (3) via said suspension system (4) that is realized according to any of claims 1 to 9.
